# EUROPEAN PATENT SPECIFICATION

(11) **EP 3 298 613 B1**
(45) Date of publication and mention of the grant of the patent: **02.12.2020**
(21) Application number: 16728106.2
(22) Date of filing: 19.05.2016
(51) Int. Cl.: H01B 3/40, H01B 3/47, H01B 3/28, H01B 17/26, H01B 17/32

(54) **INSULATION ASSEMBLY**
ISOLIERUNGSANORDNUNG
ENSEMBLE D'ISOLATION

(30) Priority: 19.05.2015 CN 201510256186; 12.06.2015 CN 201510324087; 30.03.2016 CN 201610190671
(43) Date of publication of application: 28.03.2018
(73) Proprietor: Tyco Electronics (Shanghai) Co. Ltd., Shanghai 200131 (CN)
(72) Inventor: TAN, Yuezhong, Shanghai (CN); YANG, Lizhang, Shanghai (CN); ZHANG, Rong, Shanghai (CN); LI, Peng, Shanghai (CN)
(74) Representative: Grünecker Patent- und Rechtsanwälte PartG mbB
(86) International application number: PCT/IB2016/052942
(87) International publication number: WO 2016/185419

(56) References cited:
- WO-A1-2008/074166
- CN-A- 102 254 645
- CN-U- 203 659 604
- CN-U- 204 303 483
- US-A- 3 544 707
- US-A- 5 483 023

## Description

### BACKGROUND OF THE INVENTION

### Field of the Invention

The present invention relates to an insulation assembly.

### Description of the Related Art

In electric power industry, an insulation assembly (or referred as an insulator) for electric isolation is often used. In prior art, the insulation assembly generally comprises an insulation pipe, an insulation umbrella group formed on the insulation pipe and a metal flange connected to an end of the insulation pipe.

In the prior art, since the cost of the metal flange is very high, it increases the cost of the entire insulation assembly. Furthermore, a gap may be easily appeared between the metal flange and the insulation pipe because the metal flange and the insulation pipe are made of different materials with different thermal expansion coefficients. As a result, an insulation gas, for example, SF₆, filled in the insulation pipe may be easily leaked out through the gap between the metal flange and the insulation pipe.

Furthermore, in the prior art, the metal flange also has many other disadvantages, for instance, the metal flange is very heavy in weight, the metal flange reduces the electrical performance of the insulation assembly. From US 3,544,707 A, an insulator with a flange made from epoxy is known. Insulation pipes, which are connected with one of their ends to a flange are known from CN102 254 645 A, CN203 659 604 U and CN204 303 483 U.

### SUMMARY OF THE INVENTION

The present invention has been made to overcome or alleviate at least one aspect of the above mentioned disadvantages. This is achieved by an insulation assembly as defined in claim 1.

According to an object of the present invention, there is provided an insulation assembly with low cost.

According to another object of the present invention, there is provided an insulation assembly with high sealing performance, it may effectively prevent an insulation gas or an insulation liquid filled in the insulation assembly from being leaked out.

According to another object of the present invention, there is provided an insulation assembly with excellent electrical performance.

According to an aspect of the present invention, there is provided an insulation assembly, comprising: an insulation pipe having a first end and a second end opposite to the first end; an insulation umbrella group formed on an outer wall of the insulation pipe; and an insulation base made of insulating material and connected to the first end of the insulation pipe, wherein the insulation base comprises an insulation flange and an insulation connection tube wherein the insulation connection tube is configured to have various diameters, wherein the insulation connection tube comprises: a first tube portion located at the one end of the insulation connection tube far away from the insulation flange: a second tube portion located at the other end of the insulation connection tube (adjacent to the insulation flange; and a third tube portion connected between the first tube portion and the second tube portion, wherein the first tube portion has a first constant outer diameter, the second tube portion has a second constant outer diameter larger than the first outer diameter, the third tube portion has a third outer diameter gradually changing from the first constant outer diameter to the second constant outer diameter, and wherein one end of the insulation connection tube is connected to the first end of the insulation pipe, the other end of the insulation connection tube) is connected to the insulation flange.

The insulation base may further comprise a plurality of reinforcing ribs each connected to outer walls of the insulation flange and the insulation connection tube, so as to increase a connection strength between the insulation flange and the insulation connection tube.

The plurality of insulation reinforcing ribs may be uniformly distributed and spaced around a circumference of the insulation connection tube.

The insulation base may be configured to an integral member formed by molding.

The insulation connection tube may be configured to have a constant diameter.

According to another exemplary embodiment of the present invention, an inner diameter of the insulation pipe is slightly larger than an outer diameter of the insulation connection tube, the first end of the insulation pipe is sleeved and connected to the outer wall of the one end of the insulation connection tube.

According to another exemplary embodiment of the present invention, an outer diameter of the insulation pipe is slightly less than an inner diameter of the insulation connection tube, the insulation connection tube is sleeved and connected to the outer wall of the first end of the insulation pipe.

According to another exemplary embodiment of the present invention, an inner diameter of the insulation pipe is slightly larger than an outer diameter of the first tube portion of the insulation connection tube, the first end of the insulation pipe is sleeved and connected to the outer wall of the first tube portion of the insulation connection tube.

According to another exemplary embodiment of the present invention, an outer diameter of the insulation pipe is slightly less than an inner diameter of the first tube portion of the insulation connection tube, the first tube portion of the insulation connection tube is sleeved and connected to the outer wall of the first end of the insulation pipe.

A plurality of installation holes may be formed in the insulation flange, each of the installation holes is located at a middle position between two adjacent insulation reinforcing ribs.

According to another exemplary embodiment of the present invention, the insulation assembly further comprising: an end cover mounted on the second end of the insulation pipe.

According to another exemplary embodiment of the present invention, an insulation gas or an insulation liquid is filled in an inner space of the insulation pipe.

According to another exemplary embodiment of the present invention, the insulation assembly further comprising: a wire connection bar mounted on a top wall of the end cover.

According to another exemplary embodiment of the present invention, the insulation assembly further comprising: a shielding ring mounted on the top wall of the end cover around the wire connection bar.

According to another exemplary embodiment of the present invention, the insulation assembly further comprising: a shielding sleeve provided on the insulation base and extending into the insulation connection tube and/or the insulation pipe.

According to another exemplary embodiment of the present invention, a slot is formed in a bottom surface of the insulation flange, and a flange of the shielding sleeve is adapted to be fitted in the slot of the insulation flange.

The insulation base and the insulation pipe may be made of the same insulation material.

The insulation base may be made of fiber material impregnated with curable agent.

The fiber material may comprise man-made fiber or natural plant fiber.

The man-made fiber may comprise at least one of glass fiber, Kevlar fiber, aramid fiber, nylon fiber, high density polyethylene fiber, and high or ultra high molecular weight polyethylene fiber.

The fiber material for manufacturing the insulation base may have a length within a range of 1mm∼300mm.

The fiber material for manufacturing the insulation base may have a length within a range of 10mm∼150mm.

The fiber material for manufacturing the insulation base may have a length within a range of 5mm∼100mm.

The curable agent may comprise epoxy resin.

The curable agent may comprise bisphenol A epoxy and anhydride.

According to another exemplary embodiment of the present invention, a protection coating layer with flame retardant, anti current leakage or anti aging is formed on an outer surface of the insulation base.

According to another exemplary embodiment of the present invention, the protection coating layer comprises silicon rubber and filler filled in the silicone rubber, the filler comprises at least one of Silicon powder, alumina, Zinc Oxide, Magnesium Oxide, boron nitride, titanium dioxide, and iron oxide red.

According to another exemplary embodiment of the present invention, the protection coating layer is formed on the outer surface of the insulation base by molding, spraying or hand brushing.

A liquid material for forming the protection coating layer may be cured and solidified at a temperature equal to or higher than room temperature.

In the above exemplary embodiments of the present invention, the base connected to the insulation pipe is made of insulation material, instead of metal, reducing the cost of the insulation assembly.

Furthermore, in the present invention, the insulation base and the insulation pipe both are made of insulation material, improving the connection strength between the insulation base and the insulation pipe. In addition, it may effectively prevent a gap from being occurred between the insulation base and the insulation pipe, improving the sealing performance of the insulation assembly.

Furthermore, in the present invention, the insulation base is lighter than the conventional metal flange in weight, reducing the weight of the insulation assembly.

Furthermore, in the present invention, the insulation base may effectively increase the creepage distance and the dry arcing distance of the insulation assembly.

Furthermore, in the present invention, the insulation base may significantly improve the electric field distribution of the insulation assembly, and optimize the electrical performance of the insulation assembly.

Furthermore, in some embodiments of the present invention, the protection coating layer formed on the surface of the insulation base may improve the electrical performance and the weather resistance of the insulation base.

### BRIEF DESCRIPTION OF THE DRAWINGS

The above and other features of the present invention will become more apparent by describing in detail exemplary embodiments thereof with reference to the accompanying drawings, in which:
Fig.1 is a longitudinal cross section view of an insulation assembly according to a first exemplary embodiment of the present invention;
Fig.2 is an illustrative perspective view of an insulation base of the insulation assembly of Fig.1;
Fig.3 shows another example of the insulation assembly of Fig.1;
Fig.4 is a longitudinal cross section view of an insulation assembly according to an example not belonging to the invention as claimed.
Fig. 5 is an illustrative enlarged local view of the insulation assembly of Fig.4; and
Fig.6 is an illustrative perspective view of an insulation base of the insulation assembly of Fig. 5

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an insulation assembly, comprising: an insulation pipe having a first end and a second end opposite to the first end; an insulation umbrella group formed on an outer wall of the insulation pipe; and an insulation base made of insulating material and connected to the first end of the insulation pipe.

### First embodiment

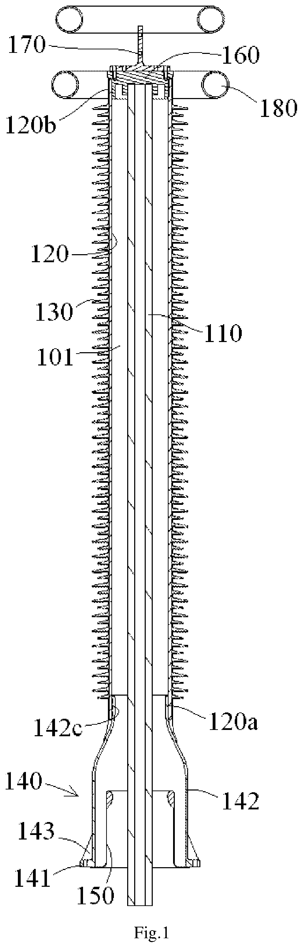

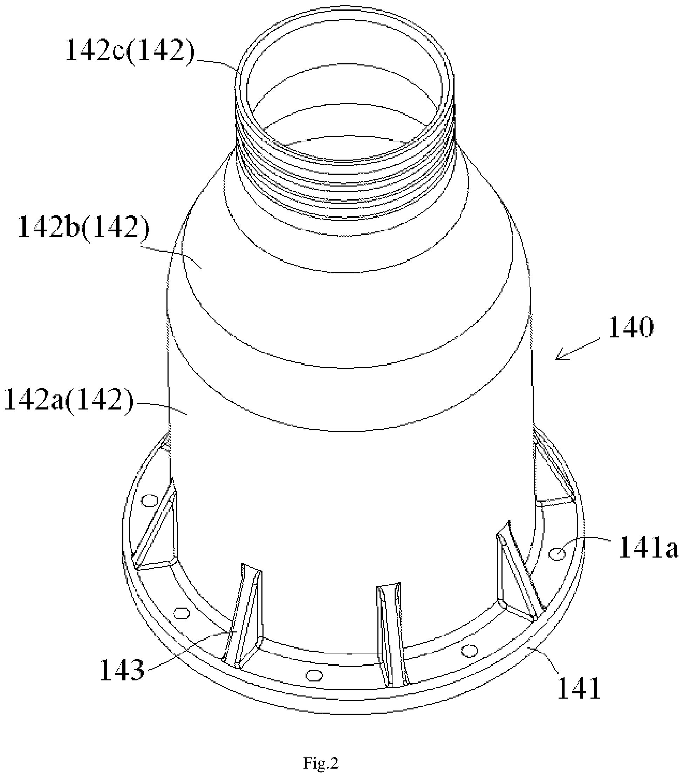

Fig.1 is a longitudinal cross section view of an insulation assembly according to a first exemplary embodiment of the present invention; Fig.2 is an illustrative perspective view of an insulation base 140 of the insulation assembly of Fig.1.

As shown in Figs. 1-2, the insulation assembly mainly comprises an insulation pipe 120, an insulation umbrella group 130 and an insulation base 140. The insulation pipe 120 has a first end 120a and a second end 120b opposite to the first end 120a. The insulation umbrella group 130 is formed on an outer wall of the insulation pipe 120. The insulation base 140 is made of insulating material and connected to the first end 120a of the insulation pipe 120.

In an embodiment, the insulation umbrella group 130 may be a silicone rubber umbrella group molded on the outer wall of the insulation pipe 120. The insulation pipe 120 may be a winding pipe formed by winding glass fiber impregnated with epoxy resin. The insulation base 140 may be made of any suitable insulation material. In an embodiment, the insulation material suitable for the insulation base 140 should have excellent physical and chemical characteristics, such as, high mechanical strength, light weight, not easy to crack, and so on. In an example, the insulation material suitable for the insulation base 140 may be but not limited to epoxy resin.

In an embodiment, the insulation base 140 may be an integral insulation member formed by molding.

In an embodiment, a protection coating layer may be formed on an outer surface of the insulation base 140, so as to improve the aging resistance and the electrical properties of the insulation base 140.

As shown in Fig.1, in an embodiment, an insulation gas or an insulation liquid may be filled in an inner space 101 of the insulation pipe 120. For example, SF₆ gas is filled in the inner space 101 of the insulation pipe 120, so as to improve the electric insulation performance of the insulation assembly.

As shown in Figs.1-2, in an embodiment, the insulation base 140 comprises an insulation flange 141 and an insulation connection tube 142. One end of the insulation connection tube 142 is connected to the first end 120a of the insulation pipe 120, the other end of the insulation connection tube 142 is connected to the insulation flange 141.

Referring to Figs. 1-2 again, the insulation base 140 may further comprise a plurality of reinforcing ribs 143 each connected to outer walls of the insulation flange 141 and the insulation connection tube 142, so as to increase a connection strength between the insulation flange 141 and the insulation connection tube 142.

As clearly shown in Fig.2, the plurality of insulation reinforcing ribs 143 are uniformly distributed and spaced around a circumference of the insulation connection tube 142. In this way, it may improve the mechanical properties of the insulation base 140, and increase the mechanical strength of the insulation base 140.

As shown in Fig.2, a plurality of installation holes 141a are formed in the insulation flange 141, each of the installation holes 141a is located at a middle position between two adjacent insulation reinforcing ribs 143. In this way, the insulation base 140 may be connected to, for example, a housing of an electric apparatus (not shown) by screwing a plurality of screws (not shown) into the plurality of installation holes 141a.

In an embodiment, as shown in Figs. 1-2, the insulation base 140 may be a single member formed by a single molding process. In this way, the insulation flange 141, the insulation tube 142, the insulation reinforcing ribs 143 and the installation holes 141a may be formed at the same time, reducing the cost of the insulation base.

As shown in Figs. 1-2, the insulation connection tube 142 is configured to have various diameters.

Referring to Figs.1-2, the insulation connection tube 142 comprises of: a first tube portion 142c located at the one end of the insulation connection tube 142 far away from the insulation flange 141; a second tube portion 142a located at the other end of the insulation connection tube 142 adjacent to the insulation flange 141; and a third tube portion 142b connected between the first tube portion 142c and the second tube portion 142a. As shown in Figs.1-2, the first tube portion 142c has a first constant outer diameter, the second tube portion 142a has a second constant outer diameter larger than the first outer diameter, the third tube portion 142b has a third outer diameter gradually changing from the first constant outer diameter to the second constant outer diameter.

As shown in Figs. 1-2, an inner diameter of the insulation pipe 120 is slightly larger than an outer diameter of the first tube portion 142c of the insulation connection tube 142. The first end 120a of the insulation pipe 120 is sleeved and connected to the outer wall of the first tube portion 142c of the insulation connection tube 142.

In this way, as shown in Figs. 1-2, the insulation pipe 120 is connected to the first tube portion 142c having the smallest diameter, thereby, it does not need to match the insulation pipe 120 with the insulation flange 141 having the largest diameter. In this way, it reduces the diameter of the insulation pipe 120, saves the material to manufacture the insulation pipe 120, and decreases the cost of the insulation pipe 120.

As shown in Figs. 1-2, the second tube portion 142a of the insulation connection tube 142 is just the place where the electric field is relatively concentrated. Thereby, the inner diameter of the second tube portion 142a is designed to be larger than the inner diameter of the first tube portion 142c, so as to uniform the electric field at the second tube portion 142a. Also, in this case, it does not need to design the diameter of the insulation connection tube 142 to be equal to the diameter of the insulation flange 141, saving the material to manufacture the insulation connection tube 142.

As shown in Fig.1, in an embodiment the insulation assembly may further comprise an end cover 160 mounted on and sealed the second end 120b of the insulation pipe 120.

As shown in Fig.1, a conductor 110 from the electric apparatus (not shown), for example, a transformer or circuit breaker, may be introduced into the insulation pipe 120 through an inlet of the first end 120a of the insulation pipe 120, and electrically connected to the end cover 160 mounted on an outlet of the second end 120b of the insulation pipe 120.

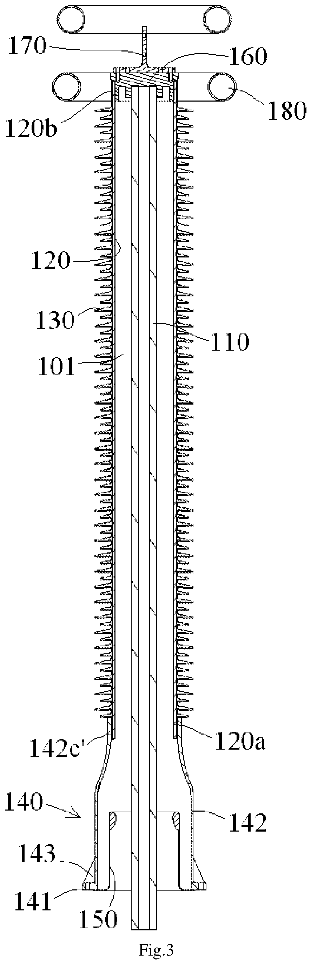

Please be noted that the present invention is not limited to the embodiments shown in Figs. 1-2, for example, Fig.3 shows another example of the insulation assembly of Fig.1. As shown in Fig.3, an outer diameter of the insulation pipe 120 is slightly less than an inner diameter of the first tube portion 142c' of the insulation connection tube 142.The first tube portion 142c' of the insulation connection tube 142 is sleeved and connected to the outer wall of the first end 120a of the insulation pipe 120.

In an embodiment, the insulation base 140 and the insulation pipe 120 may be made of the same insulation material or different insulation material with same or similar thermal expansion coefficient. In this way, it may effectively prevent a gap from being occurred between the insulation base 140 and the insulation pipe 120.

As shown in Figs. 1-2, in an embodiment, the insulation assembly may further comprise a wire connection bar 170 mounted on a top wall of the end cover 160. The wire connection bar 170 may be detachably mounted on the top wall of the end cover 160, for example, by means of screws.

As shown in Figs. 1-2, in an embodiment, the insulation assembly may further comprise a shielding ring 180 mounted on the top wall of the end cover 160 around the wire connection bar 170. The shielding ring 180 is used to uniform the electric field at the wire connection bar 170, so as to prevent the electric field concentration at the wire connection bar 170.

As shown in Figs. 1-2, in an embodiment, the insulation assembly may further comprise a shielding sleeve 150 provided on the insulation base 140 and extending into the insulation connection tube 142 and/or the insulation pipe 120. The shielding sleeve 150 is used to uniform the electric field generated by the conductor 110 at the insulation base 140, so as to prevent the electric field concentration at the insulation base.

As shown in Figs. 1-2, in an embodiment, a slot is formed in a bottom surface of the insulation flange 141, and a flange of the shielding sleeve 150 is adapted to be fitted in the slot of the insulation flange 141.

Please be noted that the insulation assembly of the present invention is not only adapted to the transformer or the circuit breaker, but also adapted to any power device that is needed to be insulated.

In an embodiment of the present invention, the insulation base 140 may be made of fiber material impregnated with curable agent. The fiber material used to manufacture the insulation base 140 may comprise man-made fiber or natural plant fiber. In an embodiment, the man-made fiber may comprise but not limited to at least one of glass fiber, Kevlar fiber, aramid fiber, nylon fiber, high density polyethylene fiber, and high or ultra high molecular weight polyethylene fiber.

In an embodiment, the fiber material used to manufacture the insulation base 140 may have a length within a range of 1mm∼300mm, preferably, within a range of 10mm∼150mm, more preferably, within a range of 5mm∼100mm.

In an embodiment, the above curable agent may comprise but not limited to epoxy resin. Preferably, the above curable agent may comprise bisphenol A epoxy and anhydride.

In an embodiment, a protection coating layer with flame retardant, anti current leakage or anti aging is formed on an outer surface of the insulation base 140.

In an embodiment, the protection coating layer may comprise silicon rubber and filler filled in the silicone rubber. The filler may comprise at least one of Silicon powder, alumina, Zinc Oxide, Magnesium Oxide, boron nitride, titanium dioxide, and iron oxide red.

In an embodiment, the protection coating layer may be formed on the outer surface of the insulation base 140 by molding, spraying or hand brushing.

In an embodiment, the liquid material for forming the protection coating layer may be cured and solidified at a temperature equal to or higher than room temperature.

In the above exemplary embodiments of the present invention, the insulation base of the insulation assembly is made of the insulation material with low price, instead of the metal material with high price. Thereby, it reduces the cost of the insulation assembly. Furthermore, the insulation base made of insulation material may be easily and reliably bonded to the insulation pipe made of insulation material. Also, the insulation base made of insulation material has a same or similar thermal expansion coefficient as the insulation pipe made of insulation material. Therefore, it is unlikely to occur the gap between the insulation base and the insulation pipe, improving the sealing performance of the insulation assembly.

In addition, in the above exemplary embodiments of the present invention, the insulation base may effectively increase the creepage distance and the dry arcing distance of the insulation assembly. The insulation base may significantly improve the electric field distribution of the insulation assembly, and optimize the electrical performance of the insulation assembly.

Furthermore, in some embodiments of the present invention, the protection coating layer formed on the surface of the insulation base may improve the electrical performance and the weather resistance of the insulation base.

Example of an insulation assembly not belonging to the invention as claimed.

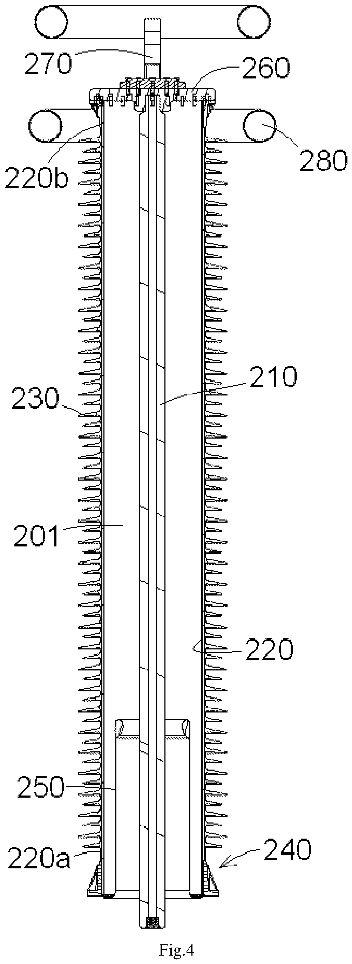

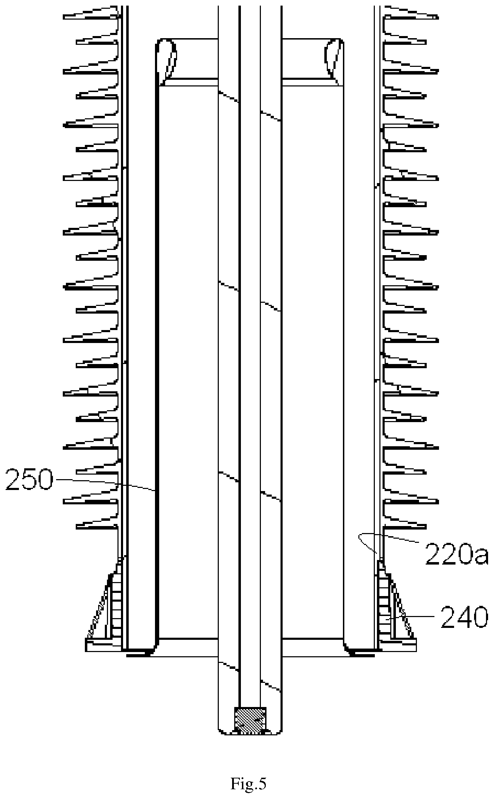

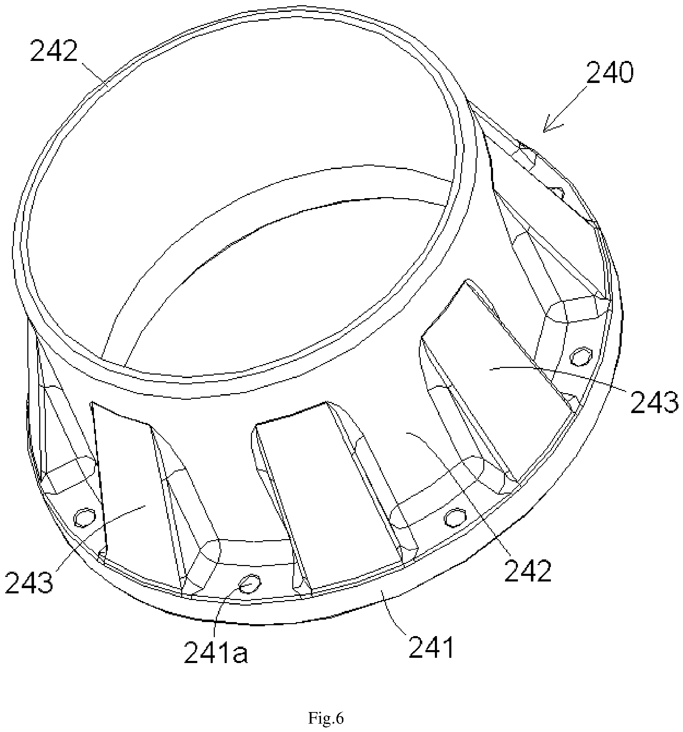

Fig.4 is a longitudinal cross section view of an insulation assembly according to an example not belonging to the invention as claimed; Fig.5 is an illustrative enlarged local view of the insulation assembly of Fig.4; and Fig.6 is an illustrative perspective view of an insulation base 240 of the insulation assembly of Fig. 4.

As shown in Figs.4-6, the insulation assembly mainly comprises an insulation pipe 220, an insulation umbrella group 230 and an insulation base 240. The insulation pipe 220 has a first end 220a and a second end 220b opposite to the first end 220a. The insulation umbrella group 230 is formed on an outer wall of the insulation pipe 220. The insulation base 240 is made of insulating material and connected to the first end 220a of the insulation pipe 220.

In this example, the insulation umbrella group 230 may be a silicone rubber umbrella group molded on the outer wall of the insulation pipe 220. The insulation pipe 220 may be a winding pipe formed by winding glass fiber impregnated with epoxy resin. The insulation base 240 may be made of any suitable insulation material. In an embodiment, the insulation material suitable for the insulation base 240 should have excellent physical and chemical characteristics, such as, high mechanical strength, light weight, not easy to crack, and so on. In an example, the insulation material suitable for the insulation base 240 may be but not limited to epoxy resin.

In this example, the insulation base 240 may be an integral insulation member formed by molding.

In this example, a protection coating layer may be formed on an outer surface of the insulation base 240, so as to improve the aging resistance and the electrical properties of the insulation base 240.

As shown in Fig.4, in an example, an insulation gas or an insulation liquid may be filled in an inner space 201 of the insulation pipe 220. For example, SF₆ gas is filled in the inner space 201 of the insulation pipe 220, so as to improve the electric insulation performance of the insulation assembly.

As shown in Figs.4-6, in an example, the insulation base 240 comprises an insulation flange 241 and an insulation connection tube 242. One end of the insulation connection tube 242 is connected to the first end 220a of the insulation pipe 220, the other end of the insulation connection tube 242 is connected to the insulation flange 241.

Referring to Figs.4-6 again, the insulation base 240 may further comprise a plurality of reinforcing ribs 243 each connected to outer walls of the insulation flange 241 and the insulation connection tube 242, so as to increase a connection strength between the insulation flange 241 and the insulation connection tube 242.

As clearly shown in Fig.6, the plurality of insulation reinforcing ribs 243 are uniformly distributed and spaced around a circumference of the insulation connection tube 242. In this way, it may improve the mechanical properties of the insulation base 240, and increase the mechanical strength of the insulation base 240.

As shown in Fig.6, a plurality of installation holes 241a are formed in the insulation flange 241, each of the installation holes 241a is located at a middle position between two adjacent insulation reinforcing ribs 243. In this way, the insulation base 240 may be connected to, for example, a housing of an electric apparatus (not shown) by screwing a plurality of screws (not shown) into the plurality of installation holes 241a.

In the example, as shown in Figs.4-6, the insulation base 240 may be a single member formed by a single molding process. In this way, the insulation flange 241, the insulation tube 242, the insulation reinforcing ribs 243 and the installation holes 241a may be formed at the same time, reducing the cost of the insulation base.

As shown in Figs.4-6, the insulation connection tube 242 is configured to have a constant diameter.

Referring to Figs.4-6, an inner diameter of the insulation pipe 220 is slightly larger than an outer diameter of the insulation connection tube 242. The first end 220a of the insulation pipe 220 is sleeved and connected to the outer wall of the one end of the insulation connection tube 242.

As shown in Fig.4, in an example the insulation assembly may further comprise an end cover 260 mounted on and sealed the second end 220b of the insulation pipe 220.

As shown in Fig.4, a conductor 210 from the electric apparatus (not shown), for example, a transformer or circuit breaker, may be introduced into the insulation pipe 220 through an inlet of the first end 220a of the insulation pipe 220, and electrically connected to the end cover 260 mounted on an outlet of the second end 220b of the insulation pipe 220.

In this example, the insulation base 240 and the insulation pipe 220 may be made of the same insulation material or different insulation material with same or similar thermal expansion coefficient. In this way, it may effectively prevent a gap from being occurred between the insulation base 240 and the insulation pipe 220.

As shown in Figs.4-6, the insulation assembly may further comprise a wire connection bar 270 mounted on a top wall of the end cover 260. The wire connection bar 270 may be detachably mounted on the top wall of the end cover 260, for example, by means of screws.

As shown in Figs.4-6, the insulation assembly may further comprise a shielding ring 280 mounted on the top wall of the end cover 260 around the wire connection bar 270. The shielding ring 280 is used to uniform the electric field at the wire connection bar 270, so as to prevent the electric field concentration at the wire connection bar 270.

As shown in Figs.4-6, the insulation assembly may further comprise a shielding sleeve 250 provided on the insulation base 240 and extending into the insulation connection tube 242 and/or the insulation pipe 220. The shielding sleeve 250 is used to uniform the electric field generated by the conductor 210 at the insulation base 240, so as to prevent the electric field concentration at the insulation base 240.

As shown in Figs.4-6, a slot is formed in a bottom surface of the insulation flange 241, and a flange of the shielding sleeve 250 is adapted to be fitted in the slot of the insulation flange 241.

Please be noted that the insulation assembly of the present invention is not only adapted to the transformer or the circuit breaker, but also adapted to any power device that is needed to be insulated.

In an embodiment of the present invention, the insulation base 240 may be made of fiber material impregnated with curable agent. The fiber material used to manufacture the insulation base 240 may comprise man-made fiber or natural plant fiber. In an embodiment, the man-made fiber may comprise but not limited to at least one of glass fiber, Kevlar fiber, aramid fiber, nylon fiber, high density polyethylene fiber, and high or ultra high molecular weight polyethylene fiber.

In an embodiment, the fiber material used to manufacture the insulation base 240 may have a length within a range of 1mm∼300mm, preferably, within a range of 10mm∼150mm, more preferably, within a range of 5mm∼100mm.

In an embodiment, the above curable agent may comprise but not limited to epoxy resin. Preferably, the above curable agent may comprise bisphenol A epoxy and anhydride.

In an embodiment, a protection coating layer with flame retardant, anti current leakage or anti aging is formed on an outer surface of the insulation base 240.

In an embodiment, the protection coating layer may comprise silicon rubber and filler filled in the silicone rubber. The filler may comprise at least one of Silicon powder, alumina, Zinc Oxide, Magnesium Oxide, boron nitride, titanium dioxide, and iron oxide red.

In an embodiment, the protection coating layer may be formed on the outer surface of the insulation base 240 by molding, spraying or hand brushing.

In an embodiment, the liquid material for forming the protection coating layer may be cured and solidified at a temperature equal to or higher than room temperature.

In the above exemplary embodiments of the present invention, the insulation base of the insulation assembly is made of the insulation material with low price, instead of the metal material with high price. Thereby, it reduces the cost of the insulation assembly. Furthermore, the insulation base made of insulation material may be easily and reliably bonded to the insulation pipe made of insulation material. Also, the insulation base made of insulation material has a same or similar thermal expansion coefficient as the insulation pipe made of insulation material. Therefore, it is unlikely to occur the gap between the insulation base and the insulation pipe, improving the sealing performance of the insulation assembly.

In addition, in the above exemplary embodiments of the present invention, the insulation base may effectively increase the creepage distance and the dry arcing distance of the insulation assembly. The insulation base may significantly improve the electric field distribution of the insulation assembly, and optimize the electrical performance of the insulation assembly.

Furthermore, in some embodiments of the present invention, the protection coating layer formed on the surface of the insulation base may improve the electrical performance and the weather resistance of the insulation base.

## Claims

1. An insulation assembly, comprising:
an insulation pipe (120, 220) having a first end (120a, 220a) and a second end (120b, 220b) opposite to the first end (120a, 220a);
an insulation umbrella group (130, 230) formed on an outer wall of the insulation pipe (120, 220); and
an insulation base (140, 240) made of insulating material and connected to the first end (120a, 220a) of the insulation pipe (120, 220),
wherein the insulation base (140, 240) comprises an insulation flange (141, 241) and an insulation connection tube (142, 242)
wherein the insulation connection tube (142) is configured to have various diameters, wherein the insulation connection tube (142) comprises:
a first tube portion (142c) located at the one end of the insulation connection tube (142) far away from the insulation flange (141):
a second tube portion (142a) located at the other end of the insulation connection tube (142) adjacent to the insulation flange (141); and
a third tube portion (142b) connected between the first tube portion (142c) and the second tube portion (142a),
wherein the first tube portion (142c) has a first constant outer diameter, the second tube portion (142a) has a second constant outer diameter larger than the first outer diameter, the third tube portion (142b) has a third outer diameter gradually changing from the first constant outer diameter to the second constant outer diameter,
**characterized in that,** one end of the insulation connection tube (142, 242) is connected to the first end (120a, 220a) of the insulation pipe (120, 220), the other end of the insulation connection tube (142, 242) is connected to the insulation flange (141, 241).

2. The insulation assembly according to claim 1,
wherein an inner diameter of the insulation pipe (220) is slightly larger than an outer diameter of the insulation connection tube (242),
wherein the first end (220a) of the insulation pipe (220) is sleeved and connected to the outer wall of the one end of the insulation connection tube (242).

3. The insulation assembly according to claim 1 or 2,
wherein an outer diameter of the insulation pipe (220) is slightly less than an inner diameter of the insulation connection tube (242),
wherein the insulation connection tube (242) is sleeved and connected to the outer wall of the first end (220a) of the insulation pipe (220).

4. The insulation assembly according to any one of claims 1 to 3,
wherein an inner diameter of the insulation pipe (120) is slightly larger than an outer diameter of the first tube portion (142c) of the insulation connection tube (142),
wherein the first end (120a) of the insulation pipe (120) is sleeved and connected to the outer wall of the first tube portion (142c) of the insulation connection tube (142).

5. The insulation assembly according to any one of claims 1 to 3,
wherein an outer diameter of the insulation pipe (120) is slightly less than an inner diameter of the first tube portion (142c') of the insulation connection tube (142),
wherein the first tube portion (142c') of the insulation connection tube (142) is sleeved and connected to the outer wall of the first end (120a) of the insulation pipe (120).

6. The insulation assembly according to any of claims 1 to 5, further comprising:
an end cover (260) mounted on the second end (220b) of the insulation pipe (220).

7. The insulation assembly according to claim 6,
wherein an insulation gas or an insulation liquid is filled in an inner space (201) of the insulation pipe (220).

8. The insulation assembly according to claim 6 or 7, further comprising:
a wire connection bar (170) mounted on a top wall of the end cover (160).

9. The insulation assembly according to any of claims 6 to 8, further comprising:
a shielding ring (180) mounted on the top wall of the end cover (160) around the wire connection bar (170).

10. The insulation assembly according to any of claims 1 to 9, further comprising:
a shielding sleeve (150) provided on the insulation base (140) and extending into the insulation connection tube (142) and/or the insulation pipe (120).

11. The insulation assembly according to claim 10,
wherein a slot is formed in a bottom surface of the insulation flange (141), and a flange of the shielding sleeve (150) is adapted to be fitted in the slot of the insulation flange (141).

12. The insulation assembly according to any of claims 1 to 11,
wherein a protection coating layer with flame retardant, anti current leakage or anti aging is formed on an outer surface of the insulation base (140).

13. The insulation assembly according to claim 12,
wherein the protection coating layer comprises silicon rubber and filler filled in the silicone rubber,
wherein the filler comprises at least one of Silicon powder, alumina, Zinc Oxide, Magnesium Oxide, boron nitride, titanium dioxide, and iron oxide red.

14. The insulation assembly according to claim 12 or 13,
wherein the protection coating layer is formed on the outer surface of the insulation base (140) by molding, spraying or hand brushing.

## Patentansprüche

1. Isolieranordnung, die umfasst:
eine Isolierröhre (120, 220) mit einem ersten Ende (120a, 220a) und einem zweiten Ende (120b, 220b), das dem ersten Ende (120a, 220a) gegenüberliegt;
eine Isolierschirm-Gruppe (130, 230), die an einer Außenwand der Isolierröhre (120, 220) ausgebildet ist; und
einen Isoliersockel (140, 240), der aus isolierendem Material besteht und mit dem ersten Ende (120a, 220a) der Isolierröhre (120, 220) verbunden ist,
wobei der Isoliersockel(140, 240) einen Isolierflansch (141, 241) und eine Isolierverbindungsröhre (142, 242) umfasst,
die Isolierverbindungsröhre (142) so ausgeführt ist, dass sie verschiedene Durchmesser hat, und die Isolierverbindungsröhre (142) umfasst:
einen ersten Röhrenabschnitt (142c), der sich an dem einen Ende der Isolierverbindungsröhre (142) befindet, das weit von dem Isolierflansch (141) entfernt ist:
einen zweiten Röhrenabschnitt (142a), der sich an dem anderen Ende der Isolierverbindungsröhre (142) befindet, das an den Isolierflansch (141) angrenzt; sowie
einen dritten Röhrenabschnitt (142b), der den ersten Röhrenabschnitt (142c) und den zweiten Röhrenabschnitt (142a) verbindet,
wobei der erste Röhrenabschnitt (142c) einen ersten konstanten Außendurchmesser hat, der zweite Röhrenabschnitt (142a) einen zweiten konstanten Außendurchmesser hat, der größer ist als der erste Außendurchmesser, der dritte Röhrenabschnitt (142b) einen dritten Außendurchmesser hat, der sich allmählich von dem ersten konstanten Außendurchmesser zu dem zweiten konstanten Außendurchmesser ändert,
**dadurch gekennzeichnet, dass** ein Ende der Isolierverbindungsröhre (142, 242) mit dem ersten Ende (120a, 220a) der Isolierröhre (120, 220) verbunden ist, wobei das andere Ende der Isolierverbindungsröhre (142, 242) mit dem Isolierflansch (141, 241) verbunden ist.

2. Isolieranordnung nach Anspruch 1,
wobei ein Innendurchmesser der Isolierröhre (220) etwas größer ist als ein Außendurchmesser der Isolierverbindungsröhre (242),
und das erste Ende (220a) der Isolierröhre (220) ummantelt und mit der Außenwand des einen Endes der Isolierverbindungsröhre (242) verbunden ist.

3. Isolieranordnung nach Anspruch 1 oder 2,
wobei ein Außendurchmesser der Isolierröhre (220) geringfügig größer ist als ein Innendurchmesser der Isolierverbindungsröhre (242),
und die Isolierverbindungsröhre (242) ummantelt und mit der Außenwand des ersten Endes (220a) der Isolierröhre (220) verbunden ist.

4. Isolieranordnung nach einem der Ansprüche 1 bis 3,
wobei ein Innendurchmesser der Isolierröhre (120) geringfügig größer ist als ein Außendurchmesser des ersten Röhrenabschnitts (142c) der Isolierverbindungsröhre (142),
und das erste Ende (120a) der Isolierröhre (120) ummantelt und mit der Außenwand des ersten Röhrenabschnitts (142c) der Isolierverbindungsröhre (142) verbunden ist.

5. Isolieranordnung nach einem der Ansprüche 1 bis 3,
wobei ein Außendurchmesser der Isolierröhre (120) geringfügig kleiner ist als ein Innendurchmesser des ersten Röhrenabschnitts (142c') der Isolierverbindungsröhre (142),
und der erste Röhrenabschnitt (142c') der Isolierverbindungsröhre (142) ummantelt und mit der Außenwand des ersten Endes (120a) der Isolierröhre (120) verbunden ist.

6. Isolieranordnung nach einem der Ansprüche 1 bis 5, die des Weiteren umfasst:
eine Endabdeckung (260), die an dem zweiten Ende (220b) der Isolierröhre (220) angebracht ist.

7. Isolieranordnung nach Anspruch 6,
wobei ein Isoliergas oder eine Isolierflüssigkeit in einen Innenraum (201) der Isolierröhre (220) gefüllt ist.

8. Isolieranordnung nach Anspruch 6 oder 7, die des Weiteren umfasst:
eine Drahtverbindungsstange (170), die an einer oberen Wand der Endabdeckung (160) angebracht ist.

9. Isolieranordnung nach einem der Ansprüche 6 bis 8, die des Weiteren umfasst:
einen Abschirmring (180), der an der oberen Wand der Endabdeckung (160) um die Drahtverbindungsstange (170) herum angebracht ist.

10. Isolieranordnung nach einem der Ansprüche 1 bis 9, die des Weiteren umfasst:
eine Abschirmhülse (150), die an dem Isoliersockel (140) vorhanden ist und sich in die Isolierverbindungsröhre (142) und/oder die Isolierröhre (120) hinein erstreckt.

11. Isolieranordnung nach Anspruch 10,
wobei ein Schlitz in einer Bodenfläche des Isolierflansches (141) ausgebildet ist, und ein Flansch der Abschirmhülse (150) so eingerichtet ist, dass er in den Schlitz des Isolierflansches (141) eingepasst wird.

12. Isolieranordnung nach einem der Ansprüche 1 bis 11,
wobei eine schützende Beschichtung mit Flammschutzmittel, Kriechstrom- oder Alterungsschutzmittel an einer Außenfläche des Isoliersockels (140) ausgebildet ist.

13. Isolieranordnung nach Anspruch 12,
wobei die schützende Beschichtung Silikonkautschuk sowie einen in den Silikonkautschuk eingefüllten Füllstoff umfasst,
und der Füllstoff Silizium-Pulver, Aluminiumoxid, Zinkoxid, Magnesiumoxid, Bornitrid, Titandioxid oder/und Eisenoxidrot umfasst.

14. Isolieranordnung nach Anspruch 12 oder 13,
wobei die schützende Beschichtung durch Formen, Sprühen oder Streichen von Hand an der Außenfläche des Isoliersockels (140) ausgebildet wird.

## Revendications

1. Ensemble d'isolation, comprenant :
un tuyau isolant (120, 220) présentant une première extrémité (120a, 220a) et une deuxième extrémité (120b, 220b) opposée à la première extrémité (120a, 220a) ;
un groupe parapluie d'isolation (130, 230) constitué d'une paroi extérieure du tuyau d'isolation (120, 220) ; et
une embase d'isolation (140, 240) constituée d'un matériau isolant et raccordée à la première extrémité (120a, 220a) du tuyau d'isolation (120, 220),
dans lequel l'embase d'isolation (140, 240) comprend une bride d'isolation (141, 241) et un tube de raccordement d'isolation (142, 242)
dans lequel le tube de raccordement d'isolation (142) est configuré pour présenter différents diamètres,
dans lequel le tube de raccordement d'isolation (142) comprend :
une première partie de tube (142c) positionnée à l'une extrémité du tube de raccordement d'isolation (142) éloignée de la bride d'isolation (141) :
une deuxième partie de tube (142a) positionnée à l'autre extrémité du tube de raccordement d'isolation (142) adjacente à la bride d'isolation (141) ; et
une troisième partie de tube (142b) raccordée entre la première partie de tube (142c) et la deuxième partie de tube (142a),
dans lequel la première partie de tube (142c) présente un premier diamètre extérieur constant, la deuxième partie de tube (142a) présente un deuxième diamètre extérieur constant plus grand que le premier diamètre extérieur, la troisième partie de tube (142b) présente un troisième diamètre extérieur évoluant graduellement du premier diamètre extérieur constant vers le deuxième diamètre extérieur constant,
**caractérisé en ce que,** une extrémité du tube de raccordement d'isolation (142, 242) est raccordée à la première extrémité (120a, 220a) du tuyau d'isolation (120, 220), l'autre extrémité du tube de raccordement d'isolation (142, 242) est raccordée à la bride d'isolation (141, 241).

2. L'ensemble d'isolation selon la revendication 1,
dans lequel un diamètre intérieur du tuyau d'isolation (220) est légèrement plus grand qu'un diamètre extérieur du tube de raccordement d'isolation (242),
dans lequel la première extrémité (220a) du tuyau d'isolation (220) est gainée et raccordée à la paroi extérieure de l'une extrémité du tube de raccordement d'isolation (242).

3. L'ensemble d'isolation selon la revendication 1 ou 2,
dans lequel un diamètre extérieur du tuyau d'isolation (220) est légèrement plus petit qu'un diamètre intérieur du tube de raccordement d'isolation (242),
dans lequel le tube de raccordement d'isolation (242) est gainé et raccordé à la paroi extérieure de la première extrémité (220a) du tuyau d'isolation (220).

4. L'ensemble isolation selon l'une quelconque des revendications 1 à 3,
dans lequel un diamètre intérieur du tuyau d'isolation (120) est légèrement plus grand qu'un diamètre extérieur de la première partie de tube (142c) du tube de raccordement d'isolation (142),
dans lequel la première extrémité (120a) du tuyau d'isolation (120) est gainée et raccordée à la paroi extérieure de la première partie de tube (142c) du tube de raccordement d'isolation (142).

5. L'ensemble isolation selon l'une quelconque des revendications 1 à 3,
dans lequel un diamètre intérieur du tuyau d'isolation (120) est légèrement plus grand qu'un diamètre extérieur de la première partie de tube (142c) du tube de raccordement d'isolation (142),
dans lequel la première partie de tube (142c') du tube de raccordement d'isolation (142) est gainée et raccordée à la paroi extérieure de la première extrémité (120a) du tuyau d'isolation (120).

6. L'ensemble d'isolation selon l'une quelconque des revendications 1 à 5, comprenant en outre :
un capot d'extrémité (260) monté sur la deuxième extrémité (220b) du tuyau d'isolation (220).

7. L'ensemble d'isolation selon la revendication 6,
dans lequel un gaz isolant ou un liquide isolant remplit un espace intérieur (201) du tuyau d'isolation (220).

8. L'ensemble d'isolation selon la revendication 6 ou 7, comprenant en outre :
une barre de raccordement de fils (170) montée sur une paroi sommitale du capot d'extrémité (160).

9. L'ensemble d'isolation selon l'une quelconque des revendications 6 à 8, comprenant en outre :
une bague de blindage (180) montée sur la paroi sommitale de l'extrémité de capot (160) autour de la barre de raccordement de fils (170).

10. L'ensemble d'isolation selon l'une quelconque des revendications 1 à 9, comprenant en outre :
une gaine de blindage (150) placée sur l'embase d'isolation (140) et s'étendant dans le tube de raccordement d'isolation (142) et/ou le tuyau d'isolation (120).

11. L'ensemble d'isolation selon la revendication 10,
dans lequel un logement est constitué dans une surface de fond de la bride d'isolation (141), et une bride de la gaine de blindage (150) est adaptée pour être accueillie dans le logement de la bride d'isolation (141) .

12. L'ensemble d'isolation selon l'une quelconque des revendications 1 à 11,
dans lequel une couche de revêtement de protection dotée d'un retardateur de flamme, d'un anti-fuite de courant ou d'un anti-vieillissement est constituée sur une surface extérieure de l'embase d'isolation (140).

13. L'ensemble d'isolation selon la revendication 12, dans lequel la couche de revêtement de protection comprend du caoutchouc de silicone et un matériau de remplissage qui remplit le caoutchouc de silicone,
dans lequel le matériau de remplissage comprend au moins un de poudre de silicium, d'alumine, d'oxyde de zinc, d'oxyde de magnésium, de nitrure de bore, de dioxyde de titane et d'oxyde de fer rouge.

14. L'ensemble d'isolation selon la revendication 12 ou 13,
dans lequel la couche de revêtement de protection est constituée sur une surface extérieure de l'embase d'isolation (140) par moulage, pulvérisation ou brossage manuel.
